# EUROPEAN PATENT SPECIFICATION

(11) **EP 1 674 872 B1**
(45) Date of publication and mention of the grant of the patent: **05.05.2010**
(21) Application number: 05102505.4
(22) Date of filing: 30.03.2005
(51) Int. Cl.: G01P 3/44, B60B 27/00, F16C 19/18

(54) **A hub-bearing assembly for the wheel of a motor vehicle comprising a sensor carrier**
Lagereinheit für eine Kraftfahrzeug-Radnabe mit einem Sensorträger
Dispositif de palier de moyeu pour la roue d'un véhicule à moteur comportant un support de capteur

(30) Priority: 24.12.2004 IT TO20040902
(43) Date of publication of application: 28.06.2006
(73) Proprietor: Aktiebolaget SKF, 415 50 Göteborg (SE)
(72) Inventor: Vignotto, Angelo, I-10134 Torino (IT); Savarese, Claudio, I-10060 Airasca (Torino) (IT)
(74) Representative: Fioravanti, Corrado

(56) References cited:
- EP-A- 0 671 628
- DE-A1- 19 806 206
- US-A1- 2003 152 302
- US-A1- 2003 202 723
- US-B1- 6 231 241

## Description

The present invention refers to a hub-bearing assembly with a sensor carrier for the wheel of a motor vehicle.

There are known hub-bearing assemblies comprising a rotatable outer race, an inner race fixed onto a stationary central hub, and a phonic wheel or encoder being part of a device for detecting relative rotation between the bearing races. The phonic wheel is a cylindrical annular element of magnetized plastic or rubber, that is fixed co-axially around the rotatable outer bearing race. The hub forms a flange extending in a radially outer direction at the side of the assembly facing the inside of the vehicle and that serves to mount the assembly to the vehicle suspension. The detecting device comprises a sensor carried by and projecting from the flange of the hub and facing the encoder from a radially outer position. Two axial bores are formed in the flange for fixing the sensor: a first bore for accommodating the sensor, and a second threaded bore for a screw fastening a plate connected to the sensor through a metal bush. To prevent the screw from accidentally unscrewing due to vibration which the assembly is subjected to in use, the screw is treated with an anti-unscrewing product.

It is an object of the present invention to simplify mounting of the sensor, reduce the number of components and avoid expensive working for forming the above-mentioned bores in the hub.

It is another object of the invention to ensure accurate axial, radial and angular positioning of the sensor.

A further object of the present invention is to effectively protect the encoder and the sensor.

These and further objects which will be more apparent hereinafter are fulfilled according to the present invention by a hub-bearing assembly as defined in the appended claims.

The structural and functional characteristics of a few preferred but not-limiting embodiments of the invention will now be described, reference being made to the accompanying drawings, in which:
figure 1 is an axial cross-sectional view of a hub-bearing assembly with a sensor carrier according to the invention;
figure 2 is an enlarged view of a detail indicated II in figure 1;
figure 3 is a side view as seen according to the arrow III in figure 1;
figure 4 is a perspective view of the assembly of figure 1; and

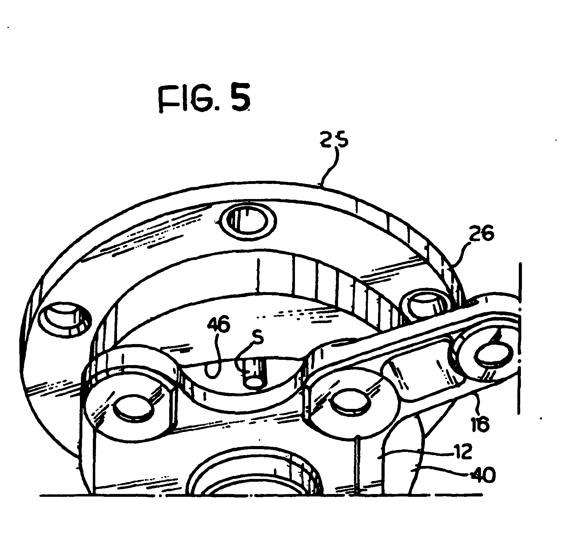

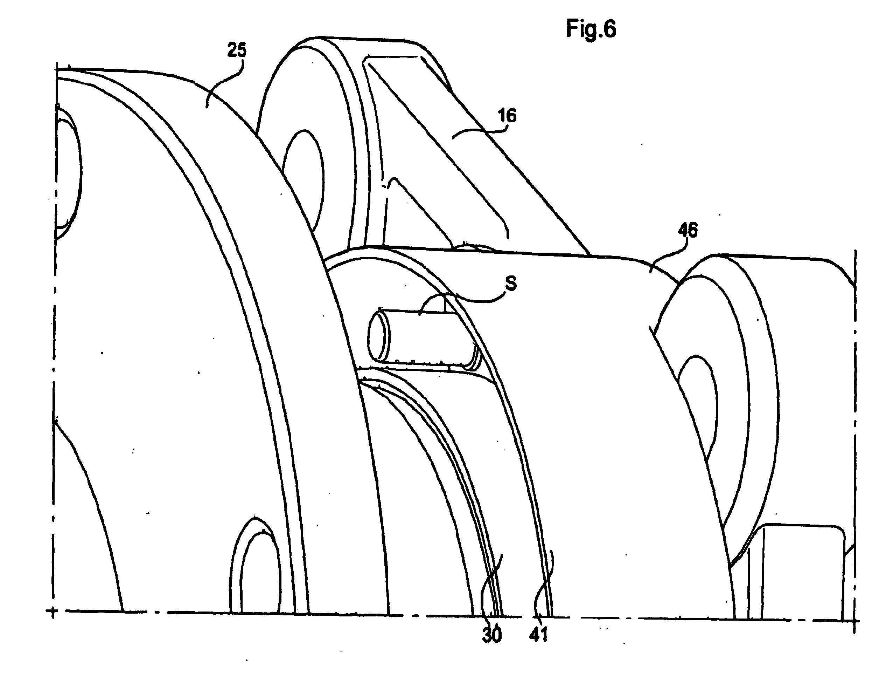

figures 5 and 6 are partial perspective views of the assembly of this invention.

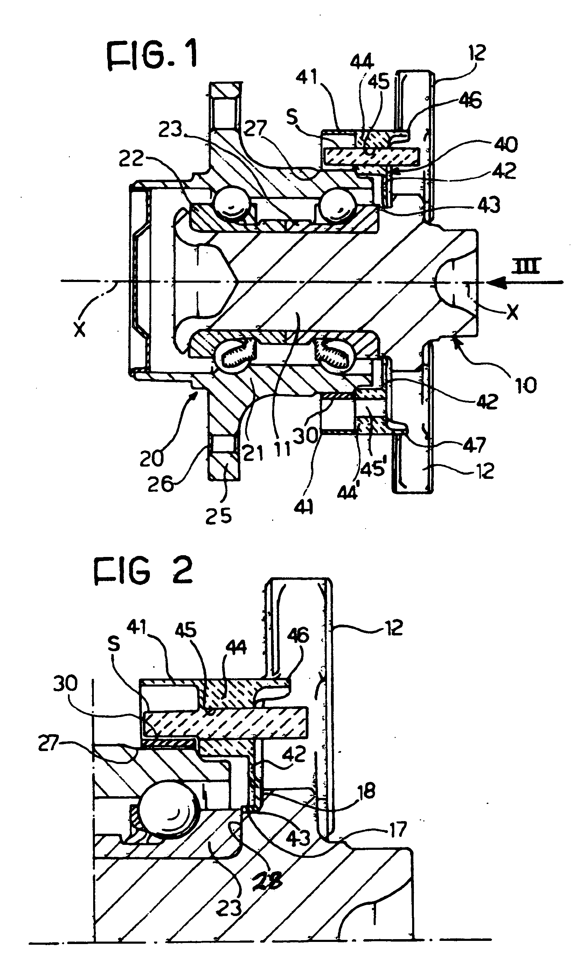

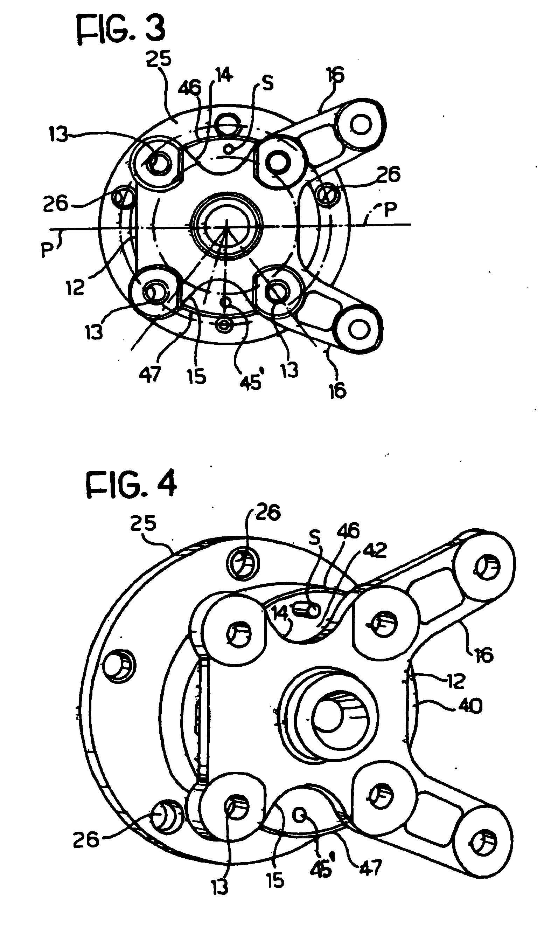

Referring initially to figures 1 and 3, a hub-bearing assembly for the wheel of a motor vehicle comprises a central stationary hub 10, a bearing unit 20, an encoder 30 and a sensor carrier 40.

The hub 10 has an axial cylindrical portion 11 with an axially inner end from which a radial flange 12 extends. Formed peripherally in the flange 12 are four axial bores 13 for accommodating respective bolts (not shown) for fastening the hub to the suspension standard of a motor vehicle. At its periphery, the flange 12 has a pair of diametrically opposite radial recesses 14, 15 and a pair of radial arms 16 for fixing a brake calliper (not shown).

The bearing unit 20, of conventional design, comprises a radially outer rotatable race 21, a pair of radially inner, stationary races 22, 23, and rolling bodies 24, in this example balls, interposed between the races 21 and 22, 23. The outer race 21 has a flange 25 with bores 26 for mounting a wheel (not shown).

The hub-bearing assembly is provided with a device for detecting the rotational speed of the rotatable outer race 21 relatively to the inner races and the hub. This device comprises the phonic wheel or encoder 30, which is fixed co-axially onto an outer cylindrical surface 27 of the rotating race 21, and a sensor S, facing the encoder 30 from a radially outer position and mounted on the sensor carrier 40. The encoder 30 is a conventional cylindrical element of rubber or plastic, magnetized with circumferentially alternating polarities.

As shown more clearly in figure 2, the hub 10 forms a cylindrical surface 17 near the inner race 23 and having a diameter smaller than the outer diameter of the race 23. The cylindrical surface 17 is joined to a radial surface 18 at the base of the flange 12. The two surfaces 17, 18, together with the side surface 28 of the inner stationary race 23, constitute a concave seat for radially and axially locking the sensor carrier 40 on the hub, as will be described in detail in the following.

The sensor carrier 40 is a plastic body of generally annular shape with a radially outer, cylindrical axial wall 41, a radial wall 42 and a radially inner, axial cylindrical edge 43.

The radial wall 42 has an axially thickened portion 44 in which there is formed an axial bore 45 for retaining the sensor S such that a part of this is radially facing the encoder 30. The outer cylindrical wall 41 extends axially towards the outside of the vehicle for surrounding and protecting the sensor S and the encoder 30.

The sensor carrier 40 forms two diametrically opposite tabs 46, 47 protruding axially towards the inside of the vehicle. The tabs 46, 47 each engage a respective one of the recesses 14, 15 of the flange 12 so as to rotationally lock the sensor carrier with respect to the hub.

The inner edge 43 of the sensor carrier remains radially centred against the axial surface 17, and axially locked between the opposite shoulder surfaces constituted by the wall 18 of the hub and the part of the side surface 28 of the bearing projecting radially beyond the axial surface 17 (figure 2).

The sensor carrier has preferably a symmetrical construction with respect to the central axial plane P (figure 3), so that it can indifferently be mounted on the hub of a wheel on the right or left side of the vehicle. To this end, the sensor carrier forms two axially thickened portions 44, 44' with respective axial bores 45, 45'. The sensor S will be inserted in bore 45 or in bore 45', according to the side of the vehicle where the sensor carrier is fitted.

In summary, the invention attains the following advantages.

A single component of plastic material (the sensor carrier 40) is used for holding the sensor correctly on the hub. The operations of boring the hub for obtaining the seats for fastening the sensor and the relevant fastening screw are eliminated. Since the flange of the hub does not need to be bored, the hub can be equally mounted on the right or left side of the vehicle. Some components are eliminated (the fastening screw, the plate connected to the sensor, and the metal bush of this plate), whereby assembling the sensor on the hub is considerably more simple and cheap.

The sensor is locked steadily on the hub and positioned accurately with respect to the encoder.

The outer cylindrical wall 41 protects the sensor and the encoder from metal particles coming from the brakes and other objects that can be flung by the wheel, and prevents contaminants (water, dust, mud) from entering the inside of the bearing. This allows to use, at least on the inner side of the vehicle, a less expensive sealing device (not shown) for sealing the gap between the races of the bearing.

The invention is not intended to be limited to the embodiment illustrated and described herein, which should be considered as an example of an embodiment of the invention. Rather, the invention may be modified with regard to the shape and arrangement of parts, constructional and functional details. For example, the seat 45 for retaining the sensor may have elastically flexible tabs (not shown) for snap-mounting and detaching the sensor. Finally, the seat for locking the sensor carrier axially and radially may consist of a radial groove entirely formed in the hub 10.

## Claims

1. A hub-bearing assembly for the wheel of a motor vehicle including:
- a stationary hub (10) with a flange (12) extending in a radially outer direction and forming at least one radial recess (14, 15);
- a radially outer, rotatable bearing race (21);
- a magnetized annular encoder (30) coaxially fixed around an outer cylindrical surface (27) of the outer race (21);
**characterised in that** the assembly further comprises an annular sensor carrier (40) of plastic material forming integrally:
- at least one seat (45, 45') for retaining a sensor (S) such that this is radially facing the encoder (30);
- at least one projection (46, 47) for engaging said recess (14, 15) so as to lock the sensor carrier (40) rotationally with respect to the hub (10);
- a radially inner portion (43) radially and axially lockable in a circumferential seat (17, 18, 28) formed at least partly by the hub.

2. An assembly according to claim 1, **characterised in that** the sensor carrier further forms a radially outer axial cylindrical wall (41) extending axially towards the outside of the vehicle for surrounding and protecting the sensor (S) and the encoder (30).

3. An assembly according to claim 1, wherein the flange (12) of the hub (10) forms at its perimeter two of said diametrically opposite radial recesses (14, 15), **characterised in that** the sensor carrier (40) forms two of said projections (46, 47) each engaging one of the radial recesses (14, 15) of the flange (12) of the hub.

4. An assembly according to claim 1, **characterised in that** the sensor carrier forms two of the said diametrically opposite seats (45, 45'), for retaining a sensor (S) alternatively in one (45) or the other (45') seat.

5. An assembly according to claim 1, **characterised in that** the projection (46, 47) extends axially towards the inside of the vehicle.

6. An assembly according to claim 1, **characterised in that** the sensor carrier (40) further forms a radial wall (42) with at least one axially thickened portion (44, 44') in which said at least one sensor (S) retaining seat (45) is formed.

7. An assembly according to any one of the preceding claims, **characterised in that** the sensor carrier (40) has a symmetrical construction with respect to a central axial plane (P).

8. An assembly according to claim 1, **characterised in that** the circumferential seat (17, 18, 19) is a concave seat facing a radially outer direction.

9. An assembly according to claim 8, **characterised in that** the circumferential seat (17, 18, 19) is defined by
a first radial surface (18) formed at the base of the flange (12) of the hub (10),
an axial cylindrical surface (17) adjacent to the first radial surface (18),
a second radial surface (28) formed by a side of a radially inner bearing race (23) fixed onto the hub, the second radial surface (28) at least partly projecting in a radially outer direction beyond the cylindrical axial surface (17).

10. An assembly according to claim 9, **characterised in that** the radially inner portion (43) of the sensor body comprises a cylindrical axial edge (43) radially centred on the cylindrical axial surface (17) and axially clamped between the first (18) and the second (28) radial surfaces.

## Patentansprüche

1. Radnabenlageranordnung für das Rad eines Kraftfahrzeugs, umfassend:
- eine feststehende Nabe (10) mit einem Flansch (12), der sich in einer radial äußeren Richtung erstreckt und mindestens eine radiale Aussparung (14, 15) bildet;
- einen radial äußeren, drehbaren Lagerring (21);
- einen magnetisierbaren ringförmigen Kodierer (30), der koaxial um eine äußere zylindrische Fläche (27) des Außenrings (21) befestigt ist; **dadurch gekennzeichnet, dass** die Anordnung weiterhin einen ringförmigen Sensorträger (40) aus Kunststoffmaterial umfasst, der integral:
- mindestens einen Sitz (45, 45') zum derartigen Halten eines Sensors (S), dass er radial zu dem Kodierer (30) weist;
- mindestens einen Vorsprung (46, 47) zum Eingriff mit der Aussparung (14, 15), um den Sensorträger (40) bezüglich der Nabe (10) drehzuverriegeln;
- einen radial inneren Teil (43), der in einem zumindest teilweise durch die Nabe gebildeten Umfangssitz (17, 18, 28) radial und axial verriegelbar ist,
bildet.

2. Anordnung nach Anspruch 1, **dadurch gekennzeichnet, dass** der Sensorträger weiterhin eine radial äußere, axiale zylindrische Wand (41) bildet, die sich axial zu der Außenseite des Fahrzeugs erstreckt, um den Sensor (S) und den Kodierer (30) zu umgeben und zu schützen.

3. Anordnung nach Anspruch 1, wobei der Flansch (12) der Nabe (10) an seinem Umfang zwei der diametral gegenüberliegenden radialen Aussparungen (14, 15) bildet, **dadurch gekennzeichnet, dass** der Sensorträger (40) zwei der Vorsprünge (46, 47) bildet, die jeweils eine der radialen Aussparungen (14, 15) des Flansches (12) der Nabe in Eingriff nehmen.

4. Anordnung nach Anspruch 1, **dadurch gekennzeichnet, dass** der Sensorträger zwei der diametral gegenüberliegenden Sitze (45, 45') zum Halten eines Sensors (S) abwechselnd in einem (45) oder in dem anderen (45') Sitz bildet.

5. Anordnung nach Anspruch 1, **dadurch gekennzeichnet, dass** sich der Vorsprung (46, 47) axial zur Innenseite des Fahrzeugs erstreckt.

6. Anordnung nach Anspruch 1, **dadurch gekennzeichnet, dass** der Sensorträger (40) weiterhin eine radiale Wand (42) mit mindestens einem axial verdickten Teil (44, 44') bildet, in dem der mindestens eine den Sensor (S) haltende Sitz (45) gebildet ist.

7. Anordnung nach einem der vorhergehenden Ansprüche, **dadurch gekennzeichnet, dass** der Sensorträger (40) einen symmetrischen Aufbau bezüglich einer mittleren Axialebene (P) aufweist.

8. Anordnung nach Anspruch 1, **dadurch gekennzeichnet, dass** der Umfangssitz (17, 18, 19) ein konkaver Sitz ist, der in eine radial äußere Richtung weist.

9. Anordnung nach Anspruch 8, **dadurch gekennzeichnet, dass** der Umfangssitz (17, 18, 19) durch
eine erste radiale Fläche (18), die an der Basis des Flansches (12) der Nabe (10) ausgebildet ist,
eine axiale zylindrische Fläche (17), die neben der ersten radialen Fläche (18) ausgebildet ist,
eine zweite radiale Fläche (28), die durch eine Seite eines radial inneren Lagerrings (23), der an der Nabe befestigt ist, ausgebildet ist, definiert wird, wobei die zweite radiale Fläche (28) zumindest teilweise in einer radial äußeren Richtung über die zylindrische axiale Fläche (17) hinaus ragt.

10. Anordnung nach Anspruch 9, **dadurch gekennzeichnet, dass** der radial innere Teil (43) des Sensorkörpers einen zylindrischen axialen Rand (43) umfasst, der radial auf der zylindrischen axialen Fläche (17) zentriert ist und zwischen der ersten (18) und der zweiten (28) radialen Fläche axial festgeklemmt ist.

## Revendications

1. Ensemble de roulement de moyeu pour la roue d'un véhicule à moteur comprenant :
- un moyeu stationnaire (10) doté d'un flasque (12) s'étendant dans une direction radialement extérieure et formant au moins une cavité radiale (14, 15) ;
- une bague tournante de roulement, radialement extérieure (21) ;
- un codeur annulaire magnétisé (30) fixé coaxialement autour d'une surface cylindrique extérieure (27) de la bague extérieure (21) ; **caractérisé en ce que** l'ensemble comprend en outre un support annulaire de capteur (40) en matière plastique formant intégralement :
- au moins un siège (45, 45') destiné à retenir un capteur (S) de manière à ce que celui-ci soit radialement face au codeur (30) ;
- au moins une saillie (46, 47) destinée à s'engager dans ladite cavité (14, 15) de manière à immobiliser le support de capteur (40) contre la rotation par rapport au moyeu (10) ;
- une partie radialement intérieure (43) pouvant être immobilisée radialement et axialement dans un siège circonférentiel (17, 18, 28) formé, du moins en partie, par le moyeu.

2. Ensemble selon la revendication 1, **caractérisé en ce que** le support de capteur forme en outre une paroi axiale cylindrique radialement extérieure (41) faisant saillie axialement vers l'extérieur du véhicule de manière à entourer et à protéger le capteur (S) et le codeur (30).

3. Ensemble selon la revendication 1, le flasque (12) de moyeu (10) formant sur son périmètre deux desdites cavités radiales diamétralement opposées (14, 15), **caractérisé en ce que** le support de capteur (40) forme deux desdites saillies (46, 47) qui s'engagent chacune dans une des cavités radiales (14, 15) du flasque (12) de moyeu.

4. Ensemble selon la revendication 1, **caractérisé en ce que** le support de capteur forme deux desdits sièges diamétralement opposés (45, 45'), de manière à ce qu'un capteur (S) soit retenu alternativement dans un siège (45) ou dans l'autre (45').

5. Ensemble selon la revendication 1, **caractérisé en ce que** la saillie (46, 47) s'étend axialement vers l'intérieur du véhicule.

6. Ensemble selon la revendication 1, **caractérisé en ce que** le support de capteur (40) forme en outre une paroi radiale (42) avec au moins une partie plus épaisse axialement (44, 44'), dans laquelle est formé au moins un siège de retenue (45) dudit capteur (S).

7. Ensemble selon l'une quelconque des revendications précédentes, **caractérisé en ce que** le support de capteur (40) a une construction symétrique par rapport à un plan axial central (P).

8. Ensemble selon la revendication 1, **caractérisé en ce que** le siège circonférentiel (17, 18, 19) est un siège concave qui fait face dans une direction radialement extérieure.

9. Ensemble selon la revendication 8, **caractérisé en ce que** le siège circonférentiel (17, 18, 19) est défini par
une première surface radiale (18) formée à la base du flasque (12) de moyeu (10),
une surface axiale cylindrique (17) adjacente à la première surface radiale (18),
une deuxième surface radiale (28) formée par un côté d'une bague de roulement radialement intérieure (23) fixée sur le moyeu, la deuxième surface radiale (28) faisant saillie, du moins en partie, dans une direction radialement extérieure au-delà de la surface axiale cylindrique (17).

10. Ensemble selon la revendication 9, **caractérisé en ce que** la partie radialement intérieure (43) du corps de capteur comprend un bord axial cylindrique (43) centré radialement sur la surface axiale cylindrique (17) et serré axialement entre la première surface radiale (18) et la deuxième surface radiale (28).
